(19) **Europäisches Patentamt**

**European Patent Office**

**Office européen des brevets**

(11) **EP 1 286 494 B1**

(12) **EUROPÄISCHE PATENTSCHRIFT**

(45) Veröffentlichungstag und Bekanntmachung des Hinweises auf die Patenterteilung:
**01.03.2006 Patentblatt 2006/09**

(51) Int Cl.:
***H04L 9/08*** (2006.01)

(21) Anmeldenummer: **02017506.3**

(22) Anmeldetag: **06.08.2002**

(54) **Verfahren zur Erzeugung eines asymmetrischen kryptografischen Gruppenschlüsselpaares**

Method for generating an asymmetric cryptographic group-key pair

Méthode de génération d'une paire de clés cryptographiques asymétriques de groupe

(84) Benannte Vertragsstaaten:
**AT BE BG CH CY CZ DE DK EE ES FI FR GB GR IE IT LI LU MC NL PT SE SK TR**

(30) Priorität: **23.08.2001 DE 10141396**

(43) Veröffentlichungstag der Anmeldung:
**26.02.2003 Patentblatt 2003/09**

(73) Patentinhaber: **Deutsche Telekom AG**
**53113 Bonn (DE)**

(72) Erfinder:
• **Martin, Tobias**
**35466 Rabenau (DE)**
• **Schwenk, Jörg, Dr.**
**91239 Henfenfeld (DE)**

(56) Entgegenhaltungen:
**WO-A-01/06697        DE-A- 19 938 198**

• **ATENIESE G ET AL: "NEW MULTIPARTY AUTHENTICATION SERVICES AND KEY AGREEMENT PROTOCOLS" 4. April 2000 (2000-04-04) , IEEE JOURNAL ON SELECTED AREAS IN COMMUNICATIONS, IEEE INC. NEW YORK, US, VOL. 18, NR. 4, PAGE(S) 628-639 XP000927584 ISSN: 0733-8716 * Seite 631, Absatz VI - Seite 632, Absatz A * * Seite 637, Absatz C ***
• **BOYD C ET AL: "DESIGN AND ANALYSIS OF KEY EXCHANGE PROTOCOLS VIA SECURE CHANNEL IDENTIFICATION" 28. November 1994 (1994-11-28) , ADVANCES IN CRYPTOLOGY - ASIACRYPT '94. 4TH. INTERNATIONAL CONFERENCE ON THE THEORY AND APPLICATIONS OF CRYPTOLOGY, WOLLONGONG, AUSTRALIA, NOV. 28 - DEC. 1, 1994. PROCEEDINGS, PROCEEDINGS OF THE CONFERENCE ON THE THEORY AND APPLICATIONS OF CRYPTOLOGY , UK XP000527595 ISBN: 3-540-59339-X * ganzes Dokument ***

**Beschreibung**

Die Erfindung betrifft ein Verfahren zur Erzeugung eines asymmetrischen kryptografischen Gruppenschlüssels gemäß der im Oberbegriff des Anspruches 1 angegebenen Art.

Bekanntlich versteht man unter Kryptografie die Wissenschaft, die sich u.a. damit beschäftigt, Nachrichten zu verschlüsseln, d.h., ihren Inhalt gegenüber unberechtigten Personen zu verbergen.

Ein Grundziel der Kryptografie ist dabei, Vertraulichkeit in der Kommunikation über öffentliche Kanäle, beispielsweise das Internet, herzustellen. Dieses Ziel wird allgemein mit dem Wort "Verschlüsselung" bezeichnet.

Man benutzt dazu sogenannte kryptografische Verfahren und kryptografische Schlüssel, um eine Nachricht so zu verschlüsseln, dass die Nachricht nach der Übermittlung nur noch von den dazu berechtigten Personen wieder entschlüsselt werden kann.

Das Verschlüsselungsverfahren ist dabei meist der Öffentlichkeit bekannt, der Schlüssel hingegen stellt die geheime Information der beteiligten Kommunikationspartner dar.

Die Kryptografie soll zudem sicherstellen, dass Manipulationen, die gegebenenfalls während der Übermittlung der Nachricht über einen öffentlichen Kanal an der Nachricht vorgenommen wurden, von dem Empfänger der Nachricht erkannt werden könne. Dieses weitere Grundziel der Kryptografie wird auch als Integrität bezeichnet.

Zur Gewährleistung der Integrität wird die so genannte digitale Signatur verwendet.

Ein weiteres Grundziel der Kryptografie ist die Authentisierung der Kommunikationspartner, d.h., die Gewissenheit, dass ein Kommunikationspartner auch derjenige ist, für den er sich ausgibt.

Dazu werden so genannte Zertifikate benutzt, die den kryptografischen Schlüssel an die Identität des Schlüsselinhabers binden. Somit ist es dem Empfänger einer Nachricht möglich, den Absender der Nachricht eindeutig zu bestimmen.

Im allgemeinen unterscheidet man zwischen symmetrischen und asymmetrischen Verschlüsselungsverfahren.

Symmetrische Verschlüsselungsverfahren zeichnen sich dabei dadurch aus, dass die beteiligten Personen ein gemeinsames Geheimnis teilen. Dieses gemeinsame Geheimnis stellt den kryptografischen Schlüssel dar. Somit besteht bei der symmetrischen Verschlüsselung der kryptografische Schlüssel nur aus einem einzigen, dem so genannten symmetrischen Schlüssel.

Im Gegensatz dazu weist bei dem asymmetrischen Verschlüsselungsverfahren der kryptografische Schlüssel, der so genannte asymmetrische Schlüssel, ein Schlüsselpaar auf. Das Schlüsselpaar besteht dabei aus einem privaten und einem öffentlichen Schlüssel. Während der private Schlüssel nur dem Schlüsselinhaber bekannt ist, muss er öffentliche Schlüssel für jedermann zugänglich sein. Das asymmetrische Verschlüsselungsverfahren wird auch als Public Key-Kryptografie bezeichnet.

Um die beschriebenen Grundziele der Kryptografie, nämlich Geheimhaltung, Integrität und Authentizität, zu erreichen, wird die asymmetrische Verschlüsselung - unter Mitwirkung einer Zertifizierungsstelle - eingesetzt.

Möchte nun beispielsweise Alice eine verschlüsselte Nachricht an Bob schicken, so verwendet sie zur verschlüsselung der Nachricht den öffentlichen Schlüssel von Bob. Als Folge hiervon ist ausschließlich Bob in der Lage, die von Alice gesendete Nachricht zu lesen, denn die Nachricht kann alleine mit dem privaten Schlüssel von Bob entschlüsselt und damit in eine lesbare Form gebracht werden.

Die Besonderheit der asymmetrischen Verschlüsselung besteht also darin, dass mit einem öffentlichen Schlüssel verschlüsselte Daten nur mit dem dazugehörigen privaten Schlüssel wieder entschlüsselt werden können.

Um sicherzustellen, dass die von Alice gesendete Nachricht während der Übermittlung von einem Dritten nicht manipuliert wurde, muss Alice die Nachricht zudem digital signieren.

Mehrere Verfahren zum digitalen Signieren sind hinlänglich bekannt. So wird beispielsweise bei dem von R. Rivest, A. Shamir und L. Adleman entwickelten Signaturverfahren - RSA-Verfahren -, veröffentlicht in "A method for optaining digital signature and public key cryptosystems", Communications of the ACM, Veb. 1978, Vo. 21, zunächst ein so genanntes Hash-Verfahren auf die zu versendende Nachricht angewendet. Dabei wird ein Komprimat aus der zu sendenden Nachricht gebildet. Dies ist nichts anderes als eine Prüfsumme. Alice wendet anschließend ihren privaten Schlüssel nur noch auf diese Prüfsumme an, d. h. die Prüfsumme wird verschlüsselt.

Das Ergebnis dieses Vorgangs bildet dann die digitale Signatur, welche an die ursprünglich zu sendende Nachricht angefügt wird. Erhält nun Bob von Alice eine mit einer digitalen Signatur versehene Nachricht, so wendet er hierauf den öffentlichen Schlüssel von Alice an. Dabei geschieht dann zweierlei: Zum einem wird die digitale Signatur entschlüsselt und Bob erhält die von Alice erzeugte Prüfsumme im Klartext. Zum anderen wird aus der empfangenen Nachricht erneut ein Hash-Komprimat gebildet. Stimmen das durch Bob - mit dem öffentlichen Schlüssel von Alice - neu gebildete Komprimat und die in der digitalen Signatur befindlichen Prüfsumme überein, so kann Bob sicher sein, dass der Inhalt der von Alice gesendeten Nachricht nicht verändert wurde.

Weiterhin kann Bob sicher sein, dass die empfangene Nachricht tatsächlich von Alice stammt, da der verwendete öffentliche Schlüssel von einer Zertifizierungsstelle zertifiziert wurde, d. h., dass der öffentliche Schlüssel an die Identität von Alice gebunden ist.

Für die im Vorfeld beschriebene Vornahme der digitalen Signatur eignen sich auch andere bekannte Signaturverfahren, wie z. B. das so genannte ElGamal-Signaturverfahren. Dabei erfolgt die Prüfung der digitalen Signatur nicht, wie im Vorfeld beschrieben, durch ein Entschlüsseln der verschlüsselt übermittelten Prüfsumme und einem anschließenden Prüfsummenvergleich, sondern der Empfänger berechnet zunächst die Prüfsumme der empfangenen Nachricht und wendet anschließend darauf die so genannte ElGamal Prüffunktion an. Ein Verschlüsseln und Entschlüsseln der Prüfsumme ist bei diesem Signaturverfahren nicht notwendig. Eine große Anzahl von Varianten des ElGamal-Signaturverfahrens sind bekannt. Zudem kann man im Gegensatz zum RSA-Verfahren in der Grundform des ElGamal-Verfahrens aus der Signatur die Nachricht nicht zurückgewinnen. (vgl. "Moderne Verfahren der Kryptografie", Beutelspacher, Schwenk, Wolfenstetter, Vieweg-Verlag 1998, Abschn. 3.6)

Aus "IEEE Journal on selected areas in communications", US, Vol. 18, Nr. 4, Seite 628 bis 639 ist bekannt, dass ein geheimer Gruppenschlüssel benutzt werden kann, um daraus einen öffentlichen, gruppenbezogenen Diffie-Hellmann Public Key abzuleiten. Der öffentliche Gruppenschlüssel kann dabei aus einem geheimen Gruppenschlüssel, der nach einem A-GDH.2-Verfahren gebildet wurde, mittels Diffie-Hellmann und Exponentation abgeleitet und ggf. zertifiziert wurde. Als nachteilig erweist sich hierbei der Umstand, dass die Gruppe außer einer einfachen Nummerierung der Gruppenmitglieder keine innere Struktur besitzt und somit eine Bildung eines asymmetrischen (öffentlichen) Gruppenschlüssel für eine Teilgruppe nicht möglich ist.

Aus der DE 198 47 941 A1 ist ein baumbasiertes Schlüsselvereinbarungsverfahren bekannt. Das baumbasierte Verfahren dient der Erzeugung und der Etablierung eines gemeinsamen kryptografischen Schlüssels für eine Gruppe mit mehreren Teilnehmern zur Gewährleistung der Geheimhaltung von Nachrichten, die über unsichere Kommunikationskanäle ausschließlich an die Gruppenteilnehmer übertragen werden.

In diesem Verfahren sind die Gruppenmitglieder den Blättern eines binären Baumes zugeordnet. Jedes Gruppenmitglied wählt sich zunächst eine Zufallszahl als Geheimnis. Ausgehend von dieser Anfangsbelegung kann nun ein neues Geheimnis $k(j+1,i)$ in der nächsthöheren $(j+1)$-sten Ebene des Baumes berechnet werden, wenn den Knoten auf der aktuellen $j$-ten Ebene bereits Geheimnisse vorhanden sind, und zwar nach der Formel

$$k(j+s,i):=g^{(k(j,2*i-1)*k(j,2*i))} \bmod p,$$

wobei $p$ eine Primzahl und $g$ eine Zahl kleiner als $p$ ist und das Zeichen "^" für den Potenzoperator steht, d.h. für $g^a$ wird $g$ $a$-mal mit sich selbst multipliziert. Diese Formel kann auch in andere mathematische Gruppen übertragen werden. Das neue Geheimnis ist allen Teilnehmern bekannt, die als Blätter unter dem Knoten $(j+1,i)$ hängen.

Die Gruppenteilnehmer können nun unter zur Hilfenahme des vorliegenden krytografischen Schlüssels - symmetrischer Gruppenschlüssel - mittels eines symmetrischen Verschlüsselungsverfahren miteinander kommunizieren.

So ist beispielsweise Alice jetzt in der Lage dem Gruppenmitglied Bob eine verschlüsselte Nachricht zu senden. Dazu verschlüsselt Alice die Nachricht mit dem bekannten symmetrischen Gruppenschlüssel. Bob ist wiederum in der Lage den empfangenen Text mi dem gleichen, auch ihm bekannten, Schlüssel zu entschlüsseln.

Nachteilig dabei ist, dass es nicht möglich ist mit dem vorhandenen symmetrischen Gruppenschlüssel eine sichere Kommunikation mit einem Gruppenfremden zu führen. So ist es beispielsweise für Alice nicht möglich eine sichere Kommunikation mit einem Gruppenfremden zu führen, da der Gruppenfremde, der nicht im Besitz des gemeinsamen symmetrischen Gruppenschlüssels ist, und somit außer Stande ist, die von Alice verschlüsselt übermittelte Nachricht zu entschlüsseln.

Zudem ist es für Alice nicht möglich, eine Nachricht an einen Gruppenfremden im Auftrag der Gruppe unter Wahrung ihrer Anonymität zu signieren. Wenn sie die Nachricht mit ihrem privaten Schlüssel signiert, gibt sie ihre Identität preis oder handelt möglicherweise nicht im Auftrag der Gruppe. Des Weiteren kann der Gruppenfremde keine verschlüsselten Nachrichten an die Gruppe senden, ohne die Gruppenmitglieder und damit deren öffentliche Schlüssel zu kennen. Der symmetrische Gruppenschlüssel kann dazu nicht herangezogen werden, da der Gruppenfremde, wie bereits erwähnt, nicht im Besitz dieses gemeinsamen Schlüssels ist.

Auch die WO 01/06697 hat die Einrichtung eines gemeinsamen Schlüssels zur sicheren Kommunikation zwischen Einheiten zum Gegenstand, wobei die Einheiten eine Gruppe von Untereinheiten umfassen. Hierfür ist ein Verfahren zur Erzeugung eines in einem Datenkommunikationssystem zwischen Einheiten gemeinsam genutzten geheimen Werks vorgeschlagen, wobei eine oder mehrere der Einheiten eine Vielzahl von Mitgliedern besitzt, um an dem Kommunikationssystem teilzunehmen, und jedes Mitglied einen dauerhaften privaten und einen zugehörigen dauerhaften öffentlichen Schlüssel besitzt.

Der Erfindung liegt nunmehr die Aufgabe zugrunde, ein Verfahren zur Erzeugung eines asymmetrischen Gruppenschlüssels derart weiterzubilden, dass unter Vermeidung der genannten Nachteile eine sichere Kommunikation zwischen einer Gruppe, bestehend aus mehreren Gruppenmitgliedern, die bereits einen symmetrischen Gruppenschlüssel teilen, und Gruppenfremden ermöglicht wird. Weiterhin liegt der Erfindung die Aufgabe zugrunde, den Gruppenmitgliedern zu ermöglichen signierte Nachrichten an einen Gruppenfremden zu senden, so dass die Nachricht nachweisbar von der Gruppe stammt, das Gruppenmitglied selbst, das die Nachricht signiert hat, jedoch anonym bleibt.

Diese Aufgabe wird für das Verfahren durch die kennzeichnenden Merkmale des Anspruches 1 in Verbindung mit seinen Oberbegriffsmerkmalen gelöst.

Der Erfindung liegt die Erkenntnis zugrunde, dass bei Vorhandensein eines asymmetrischen Gruppenschlüssels, also eines privaten Gruppenschlüssels, der ausschließlich den Gruppenmitgliedern bekannt ist, und eines öffentlichen Gruppenschlüssels, der öffentlich zugänglich ist, eine sichere Kommunikation zwischen Gruppenmitgliedern und Gruppenfremden, sowie eine Authentisierung der Gruppe gegenüber dem Gruppenfremden unter Beibehaltung der Anonymität der einzelnen Gruppenmitgliedern ermöglicht wird. Zudem wird dadurch ermöglicht, die Integrität der übermittelten Nachricht zu überprüfen.

Nach der Erfindung werden daher für die Erzeugung eines asymmetrischen kryptografischen Schlüssels, mit einem öffentlichen Gruppenschlüssel und einem privaten Gruppenschlüssel für eine Gruppe von mindestens zwei Teilnehmern - Gruppenteilnehmern -, die einen gemeinsamen, nur den Gruppenmitgliedern bekannten, symmetrischen Gruppenschlüssel teilen, dieser symmetrische Gruppenschlüssel verwendet. Der private Gruppenschlüssel basiert dabei auf dem symmetrischen Gruppenschlüssel und insbesondere auch auf weiteren den Gruppenmitgliedern bekannten Parametern.

Kennzeichnend ist dabei, dass der den Gruppenmitglieder gemeinsam bekannte symmetrische Gruppenschlüssel iterativ mittels eines baumbasierten Schlüsselvereinbarungsverfahren für Gruppen, insbesondere unter Anwendung des Diffie und Hellmann Verfahren, erzeugt wird. Das baumbasierte Schlüsselvereinbarungsverfahren hat den Vorteil, dass damit der symmetrische Gruppenschlüssel unabhängig und flexibel erzeugt werden kann. So ist es mit Hilfe des baumbasiertem Schlüsselvereinbarungsprotokoll ohne weiteres möglich, auf eine Änderung der Anzahl der Gruppenmitglieder, z. B. durch die Aufnahme eines weiteren Gruppenmitglieds, zu reagieren und auf einfache Art und Weise einen neuen symmetrischen Gruppenschlüssel zu erzeugen.

Im baumbasierten Schlüsselvereinbarungsverfahren kann z.B. das ElGamal-Signaturverfahren vorteilhaft zum Einsatz kommen. Mit Bezug auf die weiter oben angeführte Beschreibung des baumbasierten Schlüsselvereinbarungsverfahrens wäre die zu signierende Nachricht $m=g^{\wedge}k(j+1,i) \bmod p$ der öffentliche Schlüssel zum geheimen Schlüssel k $(j+1,i)$, der allen Gruppenmitgliedern, die in dem unter dem Knoten $(j+1,i)$ im binären Baum angehängt sind, bekannt ist. Zur Erstellung der Signatur ist im ElGamal-Signaturverfahren eine Zufallszahl $r(b)$ erforderlich, die den Wert $t(b)=g^{\wedge}r(b) \bmod p$ liefert, und die Signatur ist $s(b)=(m-k(j,b)*t(b))*(r(b)^{\wedge}-1) \bmod (p-1)$. Zum Signieren des neuen öffentlichen Schlüssels m sind in diesem baumbasierten Schlüsselvereinbarungsverfahren zwei El-Gamal-Signaturen erforderlich, und zwar für $b=2*i-1$ und $b=2*i$.

vorzugsweise wird aus dem privaten Gruppenschlüssel der öffentliche Gruppenschlüssel mittels eines Verfahrens, das auf dem Prinzip des diskreten Logarithmus basiert - wie nach dem Verfahren von Diffie und Hellmann, dem El-Gamal-Verschlüsselungsverfahren, dem elliptischen Kurvenverfahren, dem XTR Public Key System, sowie vergleichbare Verfahren - erzeugt. Somit liegt nun der für die Durchführung der Public Key-Kryptografie benötigte asymmetrische kryptografische Schlüssel, bestehend aus einem privaten Gruppenschlüssel und einem öffentlicher Gruppenschlüssel, der, wie ausgeführt, auf dem den einzelnen Gruppenteilnehmer vorher bekannten symmetrischen Gruppenschlüssel basiert, vor.

Zweckmäßigerweise ist der Öffentliche Gruppenschlüssel zertifiziert, d. h. der Wert des öffentlichen Gruppenschlüssels wird an die Identität aller Gruppenmitglieder gebunden. Durch die Zertifizierung des Gruppenschlüssels ist die Authentisierung der Gruppe gegenüber einem Gruppenfremden sichergestellt.

Damit der Gruppenfremde mit der Gruppe kommunizieren kann, wird der öffentliche Gruppenschlüssel vorzugsweise dem Gruppenfremden bekannt gegeben. Dies kann insbesondere durch Hinterlegung des öffentlichen Schlüssels bei einer zentralen Instanz, beispielsweise einer Zertifizierungsstelle, erfolgen.

Um eine sichere Kommunikation über öffentliche Kanäle zwischen einem Gruppenfremden und Gruppenmitgliedern zu gewährleisten, ist auch der Gruppenfremde im Besitz eines privaten und eines öffentlichen Schlüssels. Während der private Schlüssel nur dem Gruppenfremden bekannt ist, muss der öffentliche Schlüssel wiederum öffentlich zugänglich sein.

Der öffentliche Schlüssel des Gruppenfremden ist an dessen Identität gebunden, also zertifiziert, um, wie bereits erwähnt, die Authentisierung des Gruppenfremden auf diese Weise zu ermöglichen.

Möchte nun beispielsweise das Gruppenmitglied Alice im Auftrag der Gruppe mit einem Gruppenfremden kommunizieren, so verschlüsselt Alice die Nachricht mit dem öffentlichen Schlüssel des Gruppenfremden. Anschließend signiert Alice die Nachricht mit dem privaten Gruppenschlüssel.

Der Gruppenfremde ist nach Empfang der Nachricht mit Hilfe seines privaten Schlüssels in der Lage, die Nachricht zu entschlüsseln. Weiterhin kann er, wie bereits ausführlich geschildert, durch Überprüfung der digitalen Signatur die Unversehrtheit der Nachricht bzw. gegebenenfalls vorgenommen Änderungen feststellen.

Zudem kann der Gruppenfremde sicher sein, dass die Nachricht von einem Gruppenmitglied stammt, da der zur Überprüfung der digitalen Signatur verwendete öffentliche Gruppenschlüssel zertifiziert, also an die Identität aller Gruppenmitglieder gebunden wurde. Die Identität des Senders, in diesem Fall Alice, bleibt dem Gruppenfremden jedoch verborgen, da Alice für die Signatur der Nachricht den privaten Gruppenschlüssel verwendet hat. Somit ist die Anonymität des Senders, hier Alice, gegenüber dem Gruppenfremden gewährleistet.

Gemäß einer Ausführungsform der Erfindung wird der den Gruppenmitgliedern gemeinsam bekannte symmetrische Gruppenschlüssel iterativ mittels eines baumbasierten Schlüsselvereinbarungsverfahren für Gruppen, insbesondere unter Anwendung des Diffie und Hellmann Verfahrens, erzeugt. Das baumbasierte Schlüsselvereinbarungsverfahren hat den Vorteil, dass damit der symmetrische Gruppenschlüssel unabhängig und flexibel erzeugt werden kann. So ist es mit Hilfe des baumbasiertem Schlüsselvereinbarungsprotokoll ohne weiteres möglich, auf eine Änderung der Anzahl der Gruppenmitglieder, zu reagieren und auf einfache Art und Weise einen neuen symmetrischen Gruppenschlüssel zu erzeugen. Die anschließend erforderliche Neugenerierung des asymmetrischen Gruppenschlüssels auf Basis des symmetrischen Gruppenschlüssels erfolgt in der bereits beschriebenen Art und Weise.

Die Zertifizierung des öffentlichen Gruppenschlüssels wird vorzugsweise innerhalb der Gruppe von jedem Gruppenmitglied selbst vorgenommen. Dies kann beispielsweise durch digitales Signieren des öffentlichen Gruppenschlüssels durch die einzelnen Gruppenmitgliedern erfolgen. Besonders effizient ist dies bei dem baumbasiertem Schlüsselvereinbarungsverfahren möglich, da hier der Gruppenschlüssel iterativ gebildet wird, und die Bildung und Zertifizierung eines öffentlichen Schlüssels in jeder Iterationsstufe erfolgen kann, wobei der öffentliche Schlüssel der nächsten Stufe immer mit dem öffentlichen Schlüssel der darunter liegenden Stufe zertifiziert wird.

Gemäß einer anderen Ausführungsform der Erfindung wird der den Gruppenmitgliedern gemeinsam bekannte symmetrische Gruppenschlüssel von einer zentralen Einrichtung generiert.

Anschließend wird der symmetrische Gruppenschlüssel von der zentralen Einrichtung an die einzelnen Gruppenmitgliedern verteilt.

Nach der erfindungsgemäßen Generierung des asymmetrischen Gruppenschlüssel auf Basis des von der zentralen Einrichtung an die einzelnen Gruppenmitgliedern verteilten symmetrischen Gruppenschlüssel, wird vorzugsweise die Zertifizierung des öffentlichen Gruppenschlüssels von dieser zentralen Einrichtung durchgeführt.

Der Einfachheit halber sind die zentrale Instanz, also die Instanz, die die bereits zertifizierten öffentlichen Schlüssel für jedermann öffentlich zugänglich bereitstellt, und die zentrale Einrichtung, die u. a. eine Zertifizierung zentral vornimmt, vorzugsweise identisch.

Weitere Vorteile, Merkmale und Anwendungsmöglichkeiten der vorliegenden Erfindung zur Erzeugung eines asymmetrischen kryptografischen Gruppenschlüssels ergeben sich aus der nachfolgenden Beschreibung in Verbindung mit dem in der Zeichnung dargestellten Ausführungsbeispiel.

Die Erfindung wird im folgenden anhand des in der Zeichnung dargestellten Ausführungsbeispiel näher beschrieben. In der Beschreibung, in den Patentansprüchen, der Zusammenfassung und in der zeichnung werden die in der hinten angeführten Liste der Bezugszeichen verwendete Begriffe und zugeordnete Bezugszeichen verwendet.

In der Zeichnung bedeutet:

Fig. 1    eine schematische Darstellung einer Baumstruktur einer Gruppe mit vier Gruppenmitglieder A, B, C und D, sowie eine schematische Darstellung eines Gruppenfremden F, und

Fig. 2    eine schematische Darstellung der Gruppe und des Gruppenfremden aus Fig. 1, die zum Zweck des Informationsaustausches an das Telekommunikationsnetz angeschlossen sind.

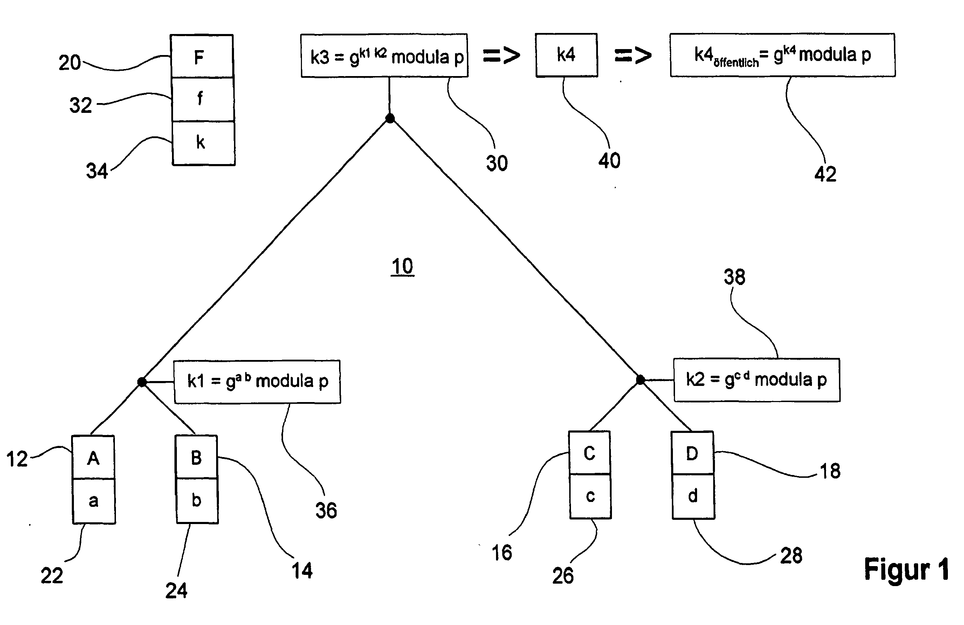

In Fig. 1 ist schematisch eine Gruppe 10 mit vier Gruppenmitgliedern 12, 14, 16 und 18 sowie ein Gruppenfremder 20 dargestellt. Aus Gründen der Übersichtlichkeit sind in Fig. 1 die Gruppenmitglieder 12, 14, 16 und 18 neben den genannten Bezugszeichen 12, 14, 16 und 18 auch durch die Großbuchstaben A, B, C und D gekennzeichnet. Entsprechend ist auch der Gruppenfremde 20 durch den Großbuchstaben F gekennzeichnet.

Jeder der Gruppenmitglieder 12, 14, 16 und 18 ist dabei im Besitz eines privaten Geheimnisses, welches im weiteren Verlauf auch als privater Schlüssel bezeichnet wird. Das Gruppenmitglied 12 ist im Besitz des privaten Schlüssels 22, entsprechend besitzen die Gruppenmitglieder 14, 16 und 18 die privaten Schlüssel 24, 26 und 28. Um die zuordnung der privaten Schlüsseln 22, 24, 26 und 28 zu dem jeweiligen Gruppenmitglied 12, 14, 16 und 18 zu erleichtern, sind die privaten Schlüssel 22, 24 26 und 28 in Fig. 1 mit entsprechenden Kleinbuchstaben, nämlich a, b, c und d, bezeichnet.

Zudem teilen sich die Gruppenmitglieder 12, 14, 16 und 18 einen gemeinsamen symmetrischen Gruppenschlüssel 30.

Der Gruppenfremde 20 ist ebenfalls im Besitz eines privaten Schlüssels 32 sowie eines öffentlich zugänglichen und zertifizierten öffentlichen Schlüssels 34.

Der den Gruppenmitgliedern 12, 14, 16 und 18 gemeinsam bekannte symmetrische Gruppenschlüssel 30 wurde innerhalb der Gruppe 10 mittels eines baumbasierten Verschlüsselungsverfahren, insbesondere unter Verwendung des Diffie-Hellmann Verfahrens erzeugt.

Dazu ist eine allen Gruppenmitgliedern 12, 14, 16 und 18 bekannte Primzahl p, sowie eine weitere öffentliche Zahl g notwendig.

Zur Erzeugung des symmetrischen Gruppenschlüssel 30 führen zunächst die Gruppenmitglieder 12 und 14 mit ihren privaten Schlüssel 22 und 24, ein Diffie und Hellmann-Verfahren durch. Sie erhalten ihren gemeinsamen Schlüssel 36.

Auch die Gruppenmitglieder 16 und 18 führen mit ihren privaten Schlüssel 26 und 28 ein DH-Verfahren durch und erhalten ihren gemeinsamen Schlüssel 38.

Anschließend führen die Gruppenmitglieder 12 und 14 auf der einen Seite und die Gruppenmitglieder 16 und 18 auf der anderen Seite ein weiteres DH-Verfahren gemeinsam durch, in welches der gemeinsame Schlüssel 36 von den Gruppenmitgliedern 12 und 14, respektive der gemeinsame Schlüssel 38 von den Gruppenmitgliedern 16 und 18 einbezogen werden. Als Ergebnis dieses letzten DH-Verfahrens liegt nun der allen Gruppenmitgliedern 12, 14, 16 und 18 bekannte symmetrische Gruppenschlüssel 30 vor.

Erfindungsgemäß wird basierend auf diesem symmetrischen Gruppenschlüssel 30 der neue asymmetrische Gruppenschlüssel mit einem privaten Gruppenschlüssel 40 und einem öffentlichen Gruppenschlüssel 42 generiert.

Dabei wird der private Gruppenschlüssel 40 aus dem symmetrischen Gruppenschlüssel 30 und weiteren, hier nicht dargestellten, allen Gruppenmitgliedern 12, 14, 16 und 18 bekannten Parametern berechnet.

Aus diesem privaten Gruppenschlüssel 40 wird anschließend durch eine erneute Anwendung des DH-Verfahren der öffentlicher Gruppenschlüssel 42 erzeugt.

Die Zertifizierung des öffentliche Gruppenschlüssel 42 erfolgt vorteilhaft durch digitales Signieren des öffentlichen Gruppenschlüssels 42 durch die einzelnen Gruppenteilnehmer 12, 14, 16 und 18.

Sollen nun Nachrichten zwischen der Gruppe 10 und dem Gruppenfremden 20 ausgetauscht werden, so muss die Gruppe 10 als auch der Gruppenfremde 20 über einen öffentlichen Kanal miteinander verbunden sein.

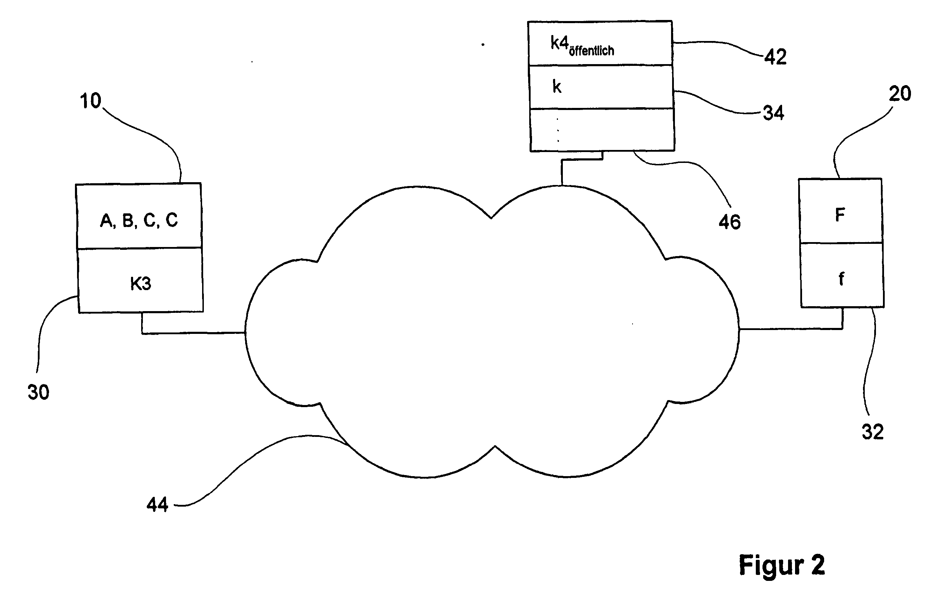

In Fig. 2 ist schematisch ein Telekommunikationsnetz 44 dargestellt, an das die Gruppe 10 und der Gruppenfremde 20 angeschlossen sind.

Weiterhin ist mit dem Telekommunikationsnetz 44 eine Zertifizierungsstelle 46 verbunden.

Wie bereits erwähnt, müssen sowohl der öffentliche Schlüssel 34 des Gruppenfremden 20, als auch der öffentliche Gruppenschlüssel 42 der Gruppe 10 öffentlich zugänglich sein. Dies geschieht hier durch die öffentliche Hinterlegung der öffentlichen Schlüssel 34 und 42 bei der Zertifizierungsstelle 46.

Eine sichere Kommunikation zwischen Gruppenmitgliedern 12, 14, 16 und 18 und dem Gruppenfremden 20 über das Telekommunikationsnetz 44 ist nun auf einfache Art und Weise möglich. Auch die Anonymität des betreffenden Gruppenmitglied, welches die Kommunikation mit dem Gruppenfremden 20 führt, ist gewährleistet.

Möchte beispielsweise das Gruppenmitglied 12 mit dem Gruppenfremden 20 sicher über das Telekommunikationsnetz 44 kommunizieren und dabei die eigene Identität geheim halten, so verschlüsselt das Gruppenmitglied 12 seine Nachricht mit dem öffentlichen Schlüssel 34 des Gruppenfremden 20. Anschließend signiert das Gruppenmitglied 12 die verschlüsselte Nachricht mit dem privaten Gruppenschlüssel 40.

In dem vorliegenden Ausführungsbeispiel basiert die digitale Signatur auf dem bereits erwähnten RSA-Verfahren. Dabei wird zunächst eine Prüfsumme - Hashwert - aus der zu sendenden Nachricht gebildet. Dieser Hashwert wird anschließend mit dem privaten Gruppenschlüssel 40 verschlüsselt. Das Ergebnis, also der.verschlüsselte Hashwert, bildet die digitale Signatur.

Dieser wird von dem Gruppenmitglied 12 zusammen mit der verschlüsselten Nachricht über das Telekommunikationsnetz 46 an den Gruppenfremden 20 übermittelt.

Zur Überprüfung, ob die empfangene Nachricht gegebenenfalls während der Übermittlung manipuliert wurde, und ob die Nachricht auch tatsächlich von einem Gruppenmitglied gesendet wurde, geht der Gruppenfremde 20 folgendermaßen vor:

Zunächst wendet der Gruppenfremde 20 den öffentlichen Gruppenschlüssel 42 auf die digitale Signatur an. Dadurch wird der verschlüsselte Hashwert entschlüsselt und der Gruppenfremde 20 erhält den Hashwert in Klartext. Zudem wird aus der empfangenen Nachricht erneut ein Hashwert gebildet. Stimmt dieser mit dem öffentlichen Gruppenschlüssel 42 erzeugte Hashwert und der entschlüsselte empfangene Hashwert überein, so kann der Gruppenfremde 20 sicher sein, dass die Nachricht während der Übermittlung über das Telekommunikationsnetz 46 nicht manipuliert wurde. Die Überprüfung der Nachricht auf Manipulation beruht im geschilderten Ausführungsbeispiel also auf einem Hashwert-Vergleich. Wäre bei der Übermittlung der Nachricht auch nur ein einzelnes Bit der Nachricht verändert worden, würden die beiden Hashwerte nicht mehr übereinstimmen.

Der Gruppenfremde 20 kann zudem sicher sein, dass die empfangene Nachricht von einem Gruppenmitglied gesendet wurde, da er zur Überprüfung der digitalen Signatur den zertifizierten öffentlichen Gruppenschlüssel 42 angewendet hat.

Die Anonymität des Senders, in diesem Fall des Gruppenmitglieds 12, ist zudem gewährleistet, da der öffentliche Gruppenschlüssel 42 an die Identität aller Gruppenmitglieder 12, 14, 16 und 18 gebunden ist und somit keine Aussage über die Identität eines bestimmten Gruppenmitglieds liefert.

Nach erfolgter Prüfung der digitalen Signatur kann der Gruppenfremde 20 mit Hilfe seines privaten Schlüssel 34 die Nachricht entschlüsseln und erhält die von dem Gruppenmitglied 12 übermittelte Nachricht in Klartext.

Wie bereits im Vorfeld angesprochen, sind für die Vornahme der digitalen Signatur neben dem hier beschriebenen RSA-Verfahren auch andere Signaturverfahren, insbesondere das ElGamal-Signaturverfahren, einsetzbar.

Entsprechend ist der Vorgang, wenn der Gruppenfremde 20 eine Nachricht an die Gruppe 10 sendet.

Zunächst verschlüsselt der Gruppenfremde 20 die zu übermittelnde Nachricht mit dem öffentlichen Gruppenschlüssel 42 und signiert anschließend die verschlüsselte Nachricht mit seinem privaten Schlüssel 32.

Die Gruppenmitglieder 12, 14, 16 und 18 sind nun in der Lage mit Hilfe des öffentlichen Schlüssels 34 des Gruppenfremden 20 die Nachricht auf Manipulation und Authentizität zu prüfen. Den Klartext der Nachricht erhalten die Gruppenmitglieder 12, 14, 16 und 18 durch entschlüsseln der Nachricht mit ihrem gemeinsamen privaten Gruppenschlüssel 40.

Die Erfindung zeichnet sich dadurch aus, dass durch die einfache Erzeugung eines asymmetrischen Gruppenschlüssels, also eines privaten Gruppenschlüssels 40 und eines öffentlichen Gruppenschlüssels 42, aus einem den Gruppenmitgliedern bekannten symmetrischen Gruppenschlüssel 30 auf eine einfache Art und Weise eine sichere Kommunikation über einen öffentlichen Kanal 44 zwischen einer Gruppe 10 mit mehreren Mitgliedern 12, 14, 16 und 18 und Gruppenfremden 20 ermöglicht wird, wobei die Anonymität der einzelnen Gruppenmitgliedern 12, 14, 16 und 18 gegenüber dem Gruppenfremden 20 gewahrt wird.

**BEZUGSZEICHENLISTE**

| | |
|---|---|
| 10 | Gruppe mit mehreren Mitgliedern |
| 12 | Gruppenmitglied A |
| 14 | Gruppenmitglied B |
| 16 | Gruppenmitglied C |
| 18 | Gruppenmitglied D |
| 20 | Gruppenfremder F |
| 22 | privater Schlüssel a des Gruppenmitglied A |
| 24 | privater Schlüssel b des Gruppenmitglied B |
| 26 | privater Schlüssel c des Gruppenmitglied C |
| 28 | privater Schlüssel d des Gruppenmitglied D |
| 30 | symmetrischer Gruppenschlüssel k3 |
| 32 | privater Schlüssel f des Gruppenfremden F |
| 34 | zertifizierter, öffentlicher Schlüssel k des Gruppenfremden F |
| 36 | gemeinsamer Schlüssel k1 der Gruppenmitglieder A und B |
| 38 | gemeinsamer Schlüssel k2 der Gruppenmitglieder C und D |
| 40 | privater Gruppenschlüssel k4 |
| 42 | zertifizierter, öffentlicher Gruppenschlüssel $k4_{öffentlich}$ |
| 44 | Telekommunikationsnetz |
| 46 | Zertifizierungsstelle |

**Patentansprüche**

1. Verfahren zur Erzeugung eines asymmetrischen kryptografischen Gruppenschlüssels mit einem öffentlichen Gruppenschlüssel (42) und einem privaten Gruppenschlüssel (40), wobei eine Gruppe (10) von mindestens zwei Teilnehmern - Gruppenmitglieder (12, 14, 16, und 18) - einen gemeinsamen, nur den Gruppenmitgliedern (12, 14, 16 und 18) bekannten, symmetrischen Gruppenschlüssel (30) teilen und der private Gruppenschlüssel (40) auf dem symmetrischen Gruppenschlüssel (30) basiert, insbesondere auch auf weiteren den Gruppenmitgliedern (12, 14, 16 und 18) bekannten Parametern, **dadurch gekennzeichnet, dass** der symmetrische Gruppenschlüssel (30) der Gruppenmitgliedern (12, 14, 16, und 18) iterativ mittels eines baumbasierten Schlüsselvereinbarungsverfahrens für Gruppen erzeugt wird.

2. Verfahren nach Anspruch 1, **dadurch gekennzeichnet, dass** aus dem privaten Gruppenschlüssel (40) der öffentliche Gruppenschlüssel (42) mittels eines Verfahrens, das auf dem Prinzip des diskreten Logarithmus basiert erzeugt wird, wie nach dem Verfahren von Diffie und Hellmann, dem ElGamal-Verschlüsselungsverfahren, dem elliptischen Kurvenverfahren, dem XTR Public Key System, sowie vergleichbare Verfahren.

3. Verfahren nach Anspruch 1 oder 2, **dadurch gekennzeichnet, dass** der öffentliche Gruppenschlüssel (42) zertifiziert wird, d. h., dass der Wert des öffentlichen Gruppenschlüssel (42) an die Identität aller Gruppenmitglieder (12, 14, 16 und 18) gebunden wird.

4. Verfahren nach einem der Ansprüche 1 bis 3, **dadurch gekennzeichnet, dass** für eine sichere Kommunikation mit einem Gruppenfremden (20) der öffentliche Gruppenschlüssel (42) dem Gruppenfremden (20) bekannt gegeben wird, insbesondere durch eine öffentliche Hinterlegung des öffentlichen Gruppenschlüssels (42) bei einer zentralen Instanz (46).

5. Verfahren nach einem der vorangehenden Ansprüche und insbesondere nach Anspruch 3, **dadurch gekennzeichnet, dass** die Zertifizierung des öffentlichen Gruppenschlüssels (42) innerhalb der Gruppe (10) von jedem Gruppenmitglied (12, 14, 16 und 18), insbesondere durch digitales Signieren des öffentlichen Gruppenschlüssels (42), selbst vorgenommen wird.

6. Verfahren nach einem der Ansprüche 1 bis 4, **dadurch gekennzeichnet, dass** der symmetrische Gruppenschlüssel (30) der Gruppenmitgliedern (12, 14, 16 und 18) von einer zentralen Einrichtung generiert wird.

7. Verfahren nach Anspruch 6, **dadurch gekennzeichnet, dass** der symmetrische Gruppenschlüssel (30) von der zentralen Einrichtung an die einzelnen Gruppenmitglieder (12, 14, 16 und 18) verteilt wird.

8. Verfahren nach Anspruch 6 und 7 und insbesondere nach Anspruch 3, **dadurch gekennzeichnet, dass** die Zertifizierung des öffentlichen Gruppenschlüssel (42) von dieser zentralen Einrichtung durchgeführt wird.

9. Verfahren nach Anspruch 6 bis 8 und insbesondere nach Anspruch 4, **dadurch gekennzeichnet, dass** die zentrale Instanz (46) und die zentrale Einrichtung identisch sind.

10. Verfahren nach einem der vorangehenden Ansprüche, **dadurch gekennzeichnet, dass** der Gruppenfremde (20) ebenfalls im Besitz eines geheimen privaten Schlüssels (32) und eines öffentlichen Schlüssel (34) ist.

11. Verfahren nach Anspruch 10, **dadurch gekennzeichnet, dass** der öffentliche Schlüssel (34) des Gruppenfremden (20) zertifiziert wurde.

12. Verfahren nach Anspruch 10 und 11, **dadurch gekennzeichnet, dass** der öffentliche Schlüssel (34) des Gruppenfremden (20) öffentlich zugänglich ist.

13. Verfahren nach einem der vorangehenden Ansprüche, **dadurch gekennzeichnet, dass** der symmetrische Gruppenschlüssel unter Anwendung des Diffie und Hellmann Verfahrens erzeugt wird.

**Claims**

1. Method for generation of an asymmetric cryptographic group key having a public group key (42) and having a private group key (40), wherein one group (10) of at least ten subscribers - group members (12, 14, 16, and 18) - shares a common symmetric group key (30) known only to the group members (12, 14, 16, and 18) and wherein the private group key (40) is based on the symmetric group key (30), in particular also on additional parameters known to the group members (12, 14, 16, and 18), **characterized in that** the symmetric group key (30) of the group members (12, 14, 16, and 18) is iteratively generated by means of a tree-based key agreement method for groups.

2. Method according to claim 1, **characterized in that** the public group key (42) is generated from the private group key (40) by means of a method based on the principle of the discrete logarithm, as in the method of Diffie and Hellman, the ElGamal encryption method, the elliptic curve method, the XTR public key system, and comparable methods.

3. Method according to any one of claims 1 or 2, **characterized in that** the public group key (42) is certified, i.e., that the value of the public group key (42) is tied to the identity of all group members (12, 14, 16, and 18).

4. Method according to any one of claims 1 through 3, **characterized in that**, for secure communication with an outsider (20) to the group, the public group key (42) is disclosed to the outsider (20) to the group, in particular by a public deposit of the public group key (42) with a central authority (46).

5. Method according to any one of the preceding claims and in particular according to claim 3, **characterized in that** the certification of the public group key (42) within the group (10) is undertaken individually by each group member (12, 14, 16, and 18), in particular by digitally signing the public group key (42).

6. Method according to any one of claims 1 through 4, **characterized in that** the symmetric group key (30) of the group members (12, 14, 16, and 18) is generated by a central facility.

7. Method according to claim 6, **characterized in that** the symmetric group key (30) is distributed by the central facility to the individual group members (12, 14, 16, and 18).

8. Method according to claims 6 and 7 and in particular according to claim 3, **characterized in that** the certification of the public group key (42) is undertaken by said central facility.

9. Method according to claims 6 through 8 and in particular according to claim 4, **characterized in that** the central authority (46) and the central facility are identical.

10. Method according any one of the preceding claims, **characterized in that** the outsider (20) to the group is also in possession of a secret, private key (32) and a public key (34).

11. Method according to claim 10, **characterized in that** the public key (34) of the outsider (20) to the group has been certified.

12. Method according to claims 10 and 11, **characterized in that** the public key (34) of the outsider (20) to the group is publicly accessible.

13. Method according any one of the preceding claims, **characterized in that** the symmetric group key is generated using the Diffie and Hellman method.

**Revendications**

1. Procédé de génération d'une clé de groupe cryptographique asymétrique avec une clé de groupe publique (42) et une clé de groupe privée (40), un groupe (10) d'au moins deux membres - membres du groupe (12, 14, 16 et 18) - se partageant une clé de groupe symétrique (30) commune n'étant connue que des membres du groupe (12, 14, 16 et 18) et la clé de groupe privée (40) étant basée sur la clé de groupe symétrique (30) et en particulier sur d'autres paramètres connus des membres du groupe (12, 14, 16 et 18), **caractérisé en ce que** la clé de groupe symétrique (30) des membres du groupe (12, 14, 16 et 18) est générée itérativement au moyen d'un procédé d'échange de clé à structure d'arbre pour groupes.

2. Procédé selon la revendication 1, **caractérisé en ce que** la clé de groupe publique (42) est générée à partir de la clé de groupe privée (40) au moyen d'un procédé basé sur le principe du logarithme discret, tel que le procédé de Diffie et Hellmann, le chiffrement d'ElGamal, le procédé des courbes elliptiques, le XTR Public Key System ou d'autres procédés analogues.

3. Procédé selon l'une des revendications 1 ou 2, **caractérisé en ce que** la clé de groupe publique (42) est certifiée, c'est-à-dire que la valeur de la clé de groupe publique (42) est liée à l'identité de tous les membres du groupe (12, 14, 16 et 18).

4. Procédé selon l'une des revendications 1 à 3, **caractérisé en ce que**, pour garantir la sécurité d'une communication avec une personne étrangère au groupe (20), la clé de groupe publique (42) est communiquée à ladite personne (20), notamment par dépôt public de la clé de groupe publique (42) auprès d'une instance centrale (46).

5. Procédé selon l'une des revendications précédentes, notamment selon la revendication 3, **caractérisé en ce que** chacun des membres du groupe (12, 14, 16 et 18) procède lui-même à la certification de la clé de groupe publique (42) à l'intérieur du groupe (10), notamment par signature numérique de la clé de groupe publique (42).

**6.** Procédé selon l'une des revendications 1 à 4, **caractérisé en ce que** la clé de groupe symétrique (30) des membres du groupe (12, 14, 16 et 18) est générée par une entité centrale.

**7.** Procédé selon la revendication 1, **caractérisé en ce que** la clé de groupe symétrique (30) est distribuée par l'entité centrale aux différents membres du groupe (12, 14, 16 et 18)

**8.** Procédé selon les revendications 6 et 7, et plus particulièrement selon la revendication 3, **caractérisé en ce que** cette entité centrale procède à la certification de la clé de groupe publique (42).

**9.** Procédé selon les revendications 6 à 8, et plus particulièrement selon la revendication 4, **caractérisé en ce que** l'instance centrale (46) et l'entité centrale sont identiques.

**10.** Procédé selon l'une des revendications précédentes, **caractérisé en ce que** la personne étrangère au groupe (20) est également en possession d'une clé secrète privée (32) et d'une clé publique (34).

**11.** Procédé selon la revendication 10, **caractérisé en ce que** la clé publique (34) de la personne étrangère au groupe (20) a été certifiée.

**12.** Procédé selon les revendications 10 et 11, **caractérisé en ce que** la clé publique (34) de la personne étrangère au groupe (20) est publiquement accessible.

**13.** Procédé selon l'une des revendications précédentes, **caractérisé en ce que** la clé de groupe symétrique est générée en application du procédé de Diffie et Hellmann.

$$k4_{öffentlich} = g^{k4} \text{ modula } p \quad (42)$$

$$k4 \quad (40)$$

$$k3 = g^{k1\,k2} \text{ modula } p \implies \quad (30)$$

$$k2 = g^{c\cdot d} \text{ modula } p \quad (38)$$

$$k1 = g^{a\cdot b} \text{ modula } p \quad (36)$$

Figur 1

**Figur 2**